# EUROPEAN PATENT SPECIFICATION

(11) **EP 2 471 866 B1**
(45) Date of publication and mention of the grant of the patent: **01.02.2017**
(21) Application number: 11195781.7
(22) Date of filing: 27.12.2011
(51) Int. Cl.: C08L 77/00, C08K 3/00, C08K 5/00, C08K 5/16, C08K 7/14

(54) **Polyamide Resin Composition**
Polyamidharzzusammensetzung
Composition de résine polyamide

(30) Priority: 28.12.2010 KR 20100136380; 23.11.2011 KR 20110122711
(43) Date of publication of application: 04.07.2012
(73) Proprietor: Cheil Industries Inc., Uiwang-si, Gyeonggi-do (KR)
(72) Inventor: Lee, Sang Hwa, Uiwang-si, Gyeonggi-do (KR); Shim, In Sik, Uiwang-si, Gyeonggi-do (KR); Kim, Pil Ho, Uiwang-si, Gyeonggi-do (KR); Baek, In Geol, Uiwang-si, Gyeonggi-do (KR); Lim, Jong Cheol, Uiwang-si, Gyeonggi-do (KR)
(74) Representative: Lang, Johannes

(56) References cited:
- EP-A1- 1 375 578

## Description

The present invention relates to a polyamide resin composition.

Reflectors are used in various products in order to use light more effectively. Recently, many products include a light source in the form of a semiconductor, i.e. semiconductor laser, light emitting diode (hereinafter, LED), and the like, to allow miniaturization of the device and light source. Reflectors for LEDs and resin compositions for the preparation thereof can require properties such as high light reflectance, high whiteness, good moldability, high dimensional stability, high mechanical strength, high heat resistance and the like.

For example, reflectors used for LEDs can require not only mechanical strength but also heat resistance because the reflectors are surface mounted onto, for example, a printed circuit board. Reflectors for LEDs can also require excellent moldability due to the miniaturization of the device. Also, reflectors can require high reflectance, and in particular the ability to inhibit the degradation of reflectance due to exposure to heating during the process of assembling the LED and the process of reflow soldering. Also, reflectors can be made using a particular insert molding method to obtain a reflector with high reflectance, and accordingly a resin composition which can be used in such a method can also be required.

Conventionally, liquid crystal polymers (LCPs) or heat-resistant polyamide resins were used as materials able to resist temperatures during reflow soldering using lead-free solder (typically 260 °C). LCP has excellent heat resistance, light stability and moldability. However, adhesion of the LCP with a sealing resin such as epoxy resin, which is used after mounting the LED to the reflector, can deteriorate. Also, LCPs can have low whiteness and thus it can be difficult to provide high reflectance thereto. Aliphatic polyamides (such as PA6, PA66, PA11, and PA12) can have excellent strength properties and injection moldability. Aliphatic polyamides do not, however, have heat resistance sufficient to resist temperatures during reflow soldering and further cannot have low hygroscopicity. Also aliphatic polyamides can suffer deteriorated reflectance due to discoloration that can occur during heating.

Japanese Patent Application Publication No. 2000-204244 is directed to a polyamide composition comprising a polyamide having a dicarboxylic acid unit including 60 to 100 mol% of a terephthalic acid unit and a diamine unit including 60 to 100 mol% of a C6 to C18 aliphatic alkylenediamine unit, and inorganic filler with a certain average particle diameter. The composition can have good heat resistance at the time of moisture absorption, dimensional stability, surface evenness and surface appearance, but does not sufficiently inhibit degradation of light reflectance due to discoloration.

International Patent Application Publication No. 2003-085029 and Japanese Patent Application Publication No. 1995-228776 are directed to a resin composition for a reflector comprising polyamide resin consisting of 1,9-diaminononane and inorganic filler. However, the resin composition does not adhere well to a sealing resin.

Japanese Patent Application Publication No. 2002-294070 is directed to a polyamide resin including potassium titanate fiber and/or wollastonite. However, the resin does not have sufficient strength when molding, and it can be difficult to use when insert molding.

Japanese Patent Application Publication No. 2004-075994 is directed to a polyamide composition useful for articles and lamp reflector materials with high whiteness and high surface reflectance. The polyamide composition has higher heat resistance than a resin composition using a conventional heat-resistant polyamide such as PA6T or PA46 and the like, but does not completely solve the discoloration problem resulting from exposure to heat.

EP 1 375 578 A1 refers to a polyamide composition comprising 100 parts by weight of a specific polyamide and 5 to 100 parts by weight of titanium oxide with an average particle size of 0.1 to 0.5 µm.

It is the object of the present invention to provide a polyamide resin composition that has excellent surface reflectance and heat resistance. The polyamide composition also has excellent mechanical strength, moldability, light stability, and discoloration resistance. The present invention also provides a molded article obtainable from the polyamide resin composition.

Above object has been achieved by a polyamide resin composition comprising:(A) 10 to 70 % by weight of crystalline polyamide resin with a melting point of 260 to 350 °C determined as heat absorption peak when dissolved measured by using DSC by maintaining temperature at 330 °C for 5 minutes, decreasing the temperature to 23 °C at a rate of 10 °C/min and increasing the temperature at the rate of 10 °C/min, a crystallization temperature of 260 to 320 °C determined as peak of phase transition temperature measured by using DSC by maintaining temperature at 330 °C for 5 minutes and decreasing the temperature to 23 °C at a rate of 10 °C/min, and a glass transition temperature of less than 100 °C determined as second-order endothermic transition point measured by using DSC by maintaining temperature at 330 °C for 5 minutes, decreasing the temperature to 23 °C at a rate of 10 °C/min and increasing the temperature at the rate of 10 °C/min;(B) 10 to 70 % by weight of amorphous polyamide resin with a glass transition temperature of 110 to 200 °C determined as second-order endothermic transition point measured by using DSC by maintaining temperature at 330 °C for 5 minutes, decreasing the temperature to 23 °C at a rate of 10 °C/min and increasing the temperature at the rate of 10 °C/min; (C) 10 to 60 % by weight of inorganic filler being an inorganic fibre;(D) 10 to 50 % by weight of white pigment,based on 100 % by weight of the crystalline polyamide resin (A), the crystalline polyamide resin (B), the inorganic filler (C) and the white pigment (D)", and (E) 0.05 to 2 part by weight of light stabilizer, based on 100 parts by weight of the crystalline polyamide resin (A), the amorphous polyamide resin (B), the inorganic filler (C) and the white pigment (D), wherein the inorganic fibre (C) comprises a glass fiber with an average length of 0.1 to 20 mm and an aspect ratio of 10 to 2,000 wherein the aspect ratio is defined as L (average length of the fibre) / D (average diameter of the fibre), and wherein the white pigment (D) comprises titanium oxide, zinc sulfide, white lead, zinc sulfate, or a combination thereof.

In exemplary embodiments of the present invention, the polyamide resin composition further comprises (F) 0.05 to 3 parts by weight of inorganic particles, based on 100 parts by weight of the crystalline polyamide resin (A), the amorphous polyamide resin (B), the inorganic filler (C) and the white pigment (D).

In exemplary embodiments of the present invention, the crystalline polyamide resin (A) has a melting point of 260 to 350 °C, a crystallization temperature of 260 to 320 °C, and a glass transition temperature of less than 100 °C.

In exemplary embodiments of the present invention, the crystalline polyamide resin (A) comprises (a-1) units derived from dicarboxylic acid and (a-2) units derived from diamine; wherein the units derived from dicarboxylic acid (a-1) comprise 30 to 100 mol% of units derived from terephthalic acid, and 0 to 70 mol% of units derived from aromatic dicarboxylic acid other than terephthalic acid, 0 to 70 mol% of units derived from C4 to C20 aliphatic dicarboxylic acid or 0 to 70 mol% of a combination of the units derived from aromatic dicarboxylic acid other than terephthalic acid and the units derived from C4 to C20 aliphatic dicarboxylic acid; and the units derived from diamine (a-2) comprise units derived from C4 to C20 linear aliphatic diamine, branched aliphatic diamine, or a combination thereof.

In exemplary embodiments of the present invention, the amorphous polyamide resin (B) has a glass transition temperature of 120 to 160 °C.

In exemplary embodiments of the present invention, the amorphous polyamide resin (B) comprises a polyamide prepared from terephthalic acid, 2,2,4-trimethyl hexamethylene diamine and 2,4,4-trimethyl hexamethylene diamine; polyamide prepared from isophthalic acid and 1,6-hexamethylene diamine; polyamide prepared from terephthalic acid, isophthalic acid and 1,6-hexamethylene diamine; copolyamide prepared from isophthalic acid, 3,3'-dimethyl-4,4'-diaminodicyclohexylmethane and laurolactam; polyamide prepared from 1,12-dodecane dicarboxylic acid and 4,4'-diaminodicyclohexylmethane; copolyamide prepared from terephthalic acid, isophthalic acid, 3,3'-dimethyl-4,4'-diaminodicyclohexylmethane and laurolactam; or a combination thereof.

In exemplary embodiments of the present invention, the inorganic filler (C) comprises a glass fiber with an average length of 0.1 to 20 mm and an aspect ratio of 10 to 2,000.

In exemplary embodiments of the present invention, the white pigment (D) comprises titanium oxide, zinc sulfide, white lead, zinc sulfate, aluminum oxide or a combination thereof.

In exemplary embodiments of the present invention, the light stabilizer (E) comprises a hindered amine-based compound.

In exemplary embodiments of the present invention, the inorganic particle (F) comprises calcium carbonate, magnesium carbonate, zinc carbonate, zinc oxide, barium sulfate, alkaline carbonate, titanated mica, antimony oxide, magnesium oxide, calcium phosphate, silica, alumina, mica, talc, kaolin or a combination thereof.

In exemplary embodiments of the present invention, the polyamide resin composition further comprises an additive comprising an antioxidant, heat stabilizer, flame retardant, fluorescent whitening agent, plasticizer, thickener, antistatic agent, releasing agent, pigment, nucleating agent or a combination thereof.

A molded article according to the present invention is prepared from the polyamide resin composition.

In exemplary embodiments of the present invention, the molded article has a reflectance of 80 to 90% at a 440 nm wavelength light, which is measured after the molded article is illuminated by a LED light source having a wavelength of 460 nm for 200 hours in constant temperature and humidity oven at a temperature of 85 °C and relative humidity of 85 %.

In exemplary embodiments of the present invention, the molded article has a yellow index of 1 to 5, which is measured after the article is illuminated by a LED light source having a wavelength of 460 nm for 200 hours in constant temperature and humidity oven at a temperature of 85 °C and relative humidity of 85 %.

The polyamide resin composition according to the present invention has excellent surface reflectance, heat resistance, mechanical strength, moldability, light stability and discoloration resistance.

The present invention now will be described more fully hereinafter in the following detailed description of the invention in which some but not all embodiments of the invention are described. Indeed, this invention may be embodied in many different forms and should not be construed as limited to the embodiments set forth herein; rather, these embodiments are provided so that this disclosure will satisfy applicable legal requirements.

A polyamide resin composition comprising:(A) 10 to 70 % by weight of crystalline polyamide resin with a melting point of 260 to 350 °C determined as heat absorption peak when dissolved measured by using DSC by maintaining temperature at 330 °C for 5 minutes, decreasing the temperature to 23 °C at a rate of 10 °C/min and increasing the temperature at the rate of 10 °C/min, a crystallization temperature of 260 to 320 °C determined as peak of phase transition temperature measured by using DSC by maintaining temperature at 330 °C for 5 minutes and decreasing the temperature to 23 °C at a rate of 10 °C/ min, and a glass transition temperature of less than 100 °C determined as second-order endothermic transition point measured by using DSC by maintaining temperature at 330 °C for 5 minutes, decreasing the temperature to 23 °C at a rate of 10 °C/min and increasing the temperature at the rate of 10 °C/min;(B) 10 to 70 % by weight of amorphous polyamide resin with a glass transition temperature of 110 to 200 °C determined as second-order endothermic transition point measured by using DSC by maintaining temperature at 330 °C for 5 minutes, decreasing the temperature to 23 °C at a rate of 10 °C/min and increasing the temperature at the rate of 10 °C/min;(C) 10 to 60 % by weight of inorganic filler being an inorganic fibre;(D) 10 to 50 % by weight of white pigment,based on 100 % by weight of the crystalline polyamide resin (A), the crystalline polyamide resin (B), the inorganic filler (C) and the white pigment (D)", and(E) 0.05 to 2 part by weight of light stabilizer, based on 100 parts by weight of the crystalline polyamide resin (A), the amorphous polyamide resin (B), the inorganic filler (C) and the white pigment (D), wherein the inorganic fibre (C) comprises a glass fiber with an average length of 0.1 to 20 mm and an aspect ratio of 10 to 2,000 wherein the aspect ratio is defined as L (average length of the fibre) / D (average diameter of the fibre), and wherein the white pigment (D) comprises titanium oxide, zinc sulfide, white lead, zinc sulfate, or a combination thereof.

### (A) Crystalline Polyamide Resin

The crystalline polyamide resin comprises (a-1) units derived from dicarboxylic acid and (a-2) units derived from diamine.

### (a-1) Units Derived from Dicarboxylic acid

The term "units derived from dicarboxylic acid" refers to residues of dicarboxylic acid from which hydroxyl groups positioned at both ends of dicarboxylic acid are removed. Examples of the dicarboxylic acid comprise aromatic dicarboxylic acids, aliphatic dicarboxylic acids, and combinations thereof.

Examples of the aromatic dicarboxylic acid comprise without limitation terephthalic acid, isophthalic acid, 2-methylterephthalic acid, naphthalene dicarboxylic acid and the like. These can be used alone or in combination thereof.

The number of carbon atom of the aliphatic dicarboxylic acid is not limited specifically, and can range from 4 to 20, for example 6 to 12. Examples of the aliphatic dicarboxylic acid comprise without limitation adipic acid, suberic acid, azelaic acid, sebacic acid, decane dicarboxylic acid, undecane dicarboxylic acid, dodecane dicarboxylic acid and the like. These can be used alone or in combination thereof. In exemplary embodiments, adipic acid can be used.

In exemplary embodiments of the present invention, the units derived from dicarboxylic acid comprise units derived from terephthalic acid in an amount of 30 to 100 mol%, for example 40 to 100 mol%, and as another example 40 to 80 mol%, based on 100 mol% of the units derived from dicarboxylic acid.

In some embodiments, the units derived from dicarboxylic acid include units derived from terephthalic acid in an amount of 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99 or 100 mol%. Further, according to some embodiments of the present invention, the amount of units derived from terephthalic acid are in a range from any of the foregoing amounts to any other of the foregoing amounts.

In exemplary embodiments of the present invention, the units derived from dicarboxylic acid comprise units derived from aromatic dicarboxylic acid other than terephthalic acid in an amount of 0 to 70 mol%, for example 0 to 60 mol%, and as another example 20 to 60 mol%, based on 100 mol% of the units derived from dicarboxylic acid.

In some embodiments, the units derived from dicarboxylic acid include units derived from aromatic dicarboxylic acid other than terephthalic acid in an amount of zero (the units derived from aromatic dicarboxylic acid other than terephthalic acid are not present), or 0 (the units derived from aromatic dicarboxylic acid other than terephthalic acid are present), 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 mol%. Further, according to some embodiments of the present invention, the amount of units derived from aromatic dicarboxylic acid other than terephthalic acid are in a range from any of the foregoing amounts to any other of the foregoing amounts.

In exemplary embodiments of the present invention, the units derived from dicarboxylic acid comprise units derived from aliphatic dicarboxylic acid having 4 to 20 carbon atoms, for example 6 to 12 carbon atoms, in an amount of 0 to 70 mol%, for example 0 to 60 mol%, and as another example 20 to 60 mol%, based on 100 mol% of the units derived from dicarboxylic acid.

In some embodiments, the units derived from dicarboxylic acid include units derived from aliphatic dicarboxylic acid in an amount of zero (the units derived from aliphatic dicarboxylic acid are not present), or 0 (the units derived from aliphatic dicarboxylic acid units are present), 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66,67, 68, 69, or 70 mol%. Further, according to some embodiments of the present invention, the amount of units derived from aliphatic dicarboxylic acid are in a range from any of the foregoing amounts to any other of the foregoing amounts.

In exemplary embodiments of the present invention, the units derived from dicarboxylic acid comprise 30 to 100 mol% of units derived from terephthalic acid, and 0 to 70 mol% of units derived from aromatic dicarboxylic acid other than terephthalic acid, 0 to 70 mol% of units derived from aliphatic dicarboxylic acid having 4 to 20 carbon atoms or 0 to 70 mol% of units derived from aromatic dicarboxylic acid other than terephthalic acid and units derived from aliphatic dicarboxylic acid having 4 to 20 carbon atoms, based on 100 mol% of the units derived from dicarboxylic acid.

In exemplary embodiments of the present invention, the units derived from dicarboxylic acid (a-1) comprise a small amount, for example 10 mol% or less, of units derived from polycarboxylic acid having 3 or more carboxyl groups. Examples of the polycarboxylic acid having 3 or more carboxyl groups comprise trimellitic acid, pyromellitic acid and the like, and combinations thereof.

### (a-2) Units Derived from Diamine

The term "units derived from diamine" refers to residues of diamine from which hydrogens positioned at both ends of the diamine are removed. Examples of diamines comprise linear and/or branched aliphatic diamines having 4 to 20 carbon atoms, for example 6 to 12 carbon atoms.

Examples of the linear aliphatic diamine comprise without limitation 1,4-diaminobutane, 1,6-diaminohexane, 1,7-diaminoheptane, 1,8-diaminooctane, 1,9-diaminononane, 1,10-diaminodecane, 1,11-diaminoundecane, 1,12-diaminododecane and the like. These can be used alone or in combination thereof.

In exemplary embodiments of the present invention, the units derived from diamine comprise units derived from 1,6-diaminohexane in an amount of 50 to 100 mol%.

In some embodiments, the units derived from diamine comprise units derived from 1,6-diaminohexane in an amount of 50, 51, 52,53, 54, 55, 56, 57, 58, 59, 60, 61, 62, 63, 64, 65, 66, 67, 68, 69, 70, 71, 72, 73, 74, 75, 76, 77, 78,79, 80, 81, 82, 83, 84, 85, 86, 87, 88, 89, 90, 91, 92, 93, 94, 95, 96, 97, 98, 99 or 100 mol%. Further, according to some embodiments of the present invention, the amount of units derived from 1,6-diaminohexane is in a range from any of the foregoing amounts to any other of the foregoing amounts.

Examples of the branched aliphatic diamine comprise without limitation 2-methyl-1,5-diaminopentane, 2-methyl-1,6-diaminohexane, 2-methyl-1,7-diaminoheptane, 2-methyl-1,8-diaminooctane, 2-methyl-1,9-diaminononane, 2-methyl-1,10-diaminodecane, 2-methyl-1,11-diaminoundecane and the like. These can be used alone or in combination thereof. In exemplary embodiments, 2-methyl-1,5-diaminopentane, 2-methyl-1,7-diaminoheptane, 2-methyl-1,8-diaminooctane and/or 2-metlryl-1,9-diaminononane can be used.

The crystalline polyamide resin (A) can be prepared by known methods, and can be prepared by polycondensation of the dicarboxylic acid component and the diamine component. For example, as disclosed in International Patent Application Publication No. 2003-085029, the crystalline polyamide resin can be prepared by heating a dicarboxylic acid component and a diamine component in the presence of a catalyst to obtain a prepolymer, and polycondensing the prepolymer by imparting shearing stress to the molten material of the prepolymer.

In exemplary embodiments of the present invention, the crystalline polyamide resin (A) has an intrinsic viscosity [η] of 0.3 to 0.9 dl/g, for example 0.5 to 0.9 d1/g, and as another example 0.6 to 0.9 d1/g measured in 96.5 % sulfuric acid solution at 25 °C. When the intrinsic viscosity of the crystalline polyamide resin is within the above range, excellent flowability during molding is maintained.

In exemplary embodiments of the present invention, the crystalline polyamide resin (A) has a melting point of 260 to 350 °C, for example 290 to 335 °C measured by differential scanning calorimeter (DSC). In exemplary embodiments of the present invention, the crystalline polyamide resin (A) has a crystallization temperature of 260 to 320 °C, for example 280 to 300 °C measured by differential scanning calorimeter (DSC). In exemplary embodiments of the present invention, the crystalline polyamide resin (A) has a glass transition temperature of 100°C or less measured by differential scanning calorimeter (DSC). When the melting point, the crystallization temperature and the glass transition temperature of the crystalline polyamide resin are within the above range, the composition has excellent heat resistance. Typical examples of the crystalline polyamide resin having the above features comprise without limitation C3200 made by Mitsui Chemical Company (Japan) and A4002 made by Solvay Company (Belgium).

In exemplary embodiments of the present invention, the crystalline polyamide resin (A) comprises (a-1) units derived from dicarboxylic acid and (a-2) units derived from diamine, wherein the units derived from dicarboxylic acid (a-1) comprise 30 to 100 mol% of units derived from terephthalic acid, and 0 to 70 mol% of units derived from aromatic dicarboxylic acid other than terephthalic acid, 0 to 70 mol% of units derived from aliphatic dicarboxylic acid having 4 to 20 carbon atoms or 0 to 70 mol% of units derived from aromatic dicarboxylic acid other than terephthalic acid and units derived from aliphatic dicarboxylic acid having 4 to 20 carbon atoms, based on 100 mol% of units derived from dicarboxylic acid; and the units derived from diamine (a-2) comprise units derived from linear and/or branched aliphatic diamine having 4 to 20 carbon atoms.

The polyamide resin composition include the crystalline polyamide resin (A) in an amount of 10 to 70 % by weight, for example 10 to 50 % by weight, based on 100 % by weight of the crystalline polyamide resin (A), the amorphous polyamide resin (B), the inorganic filler (C) and the white pigment (D). In some embodiments, polyamide resin composition include the crystalline polyamide resin (A) in an amount of 10, 11, 12, 13, 14, 15,16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 % by weight. Further, according to some embodiments of the present invention, the amount of crystalline polyamide resin (A) is in a range from any of the foregoing amounts to any other of the foregoing amounts.

### (B) Amorphous Polyamide Resin

The amorphous polyamide resin with a glass transition temperature of 110 to 200 °C according to the present invention can be prepared from the following monomers.

A linear and/or branched aliphatic dicarboxylic acid having 6 to 22 carbon atoms, for example adipic acid, 2,2,4-trimethyl adipic acid, 2,4,4-trimethyl adipic acid, azelaic acid, sebacic acid, 1,12-dodecane dicarboxylic acid and the like, and combinations thereof, can be used.

A ring-shaped aliphatic dicarboxylic acid having 6 to 22 carbon atoms, for example cyclohexane-1,4-dicarboxylic acid, 4,4'-dicarboxydicyclohexylpropane, 1,4-bis-carboxymethyl-cyclohexane and the like, and combinations thereof, can be used.

An aromatic dicarboxylic acid having 8 to 22 carbon atoms, for example 4,4'-diphenylmethanedicarboxylic acid, isophthalic acid, tributyl isophthalic acid, terephthalic acid, 1,4-naphthalenedicarboxylic acid, 1,5-naphthalenedicarboxylic acid, 2,6- naphthalenedicarboxylic acid, 2,7- naphthalenedicarboxylic acid, diphenylether-4,4'-dicarboxylic acid and the like, and combinations thereof can be used.

A linear and/or branched aliphatic diamine having 6 to 14 carbon atoms, for example 1,6-hexamethylene diamine, 2-methyl-1,5-diaminopentane, 2,2,4-trimethyl hexamethylene diamine, 2,4,4- trimethyl hexamethylene diamine, 1,9-nonamethylene diamine, 1,10-decamethylene diamine, 1,12-dodecamethylene diamine and the like, and combinations thereof can be used.

A ring-shaped aliphatic diamine having 6 to 22 carbon atoms, for example 4,4'-diaminodicyclohexylmethane, 3,3'-dimethyl-4,4'-diaminodicyclohexylmethane, 4,4'-diaminodicyclopropane, 1,4-diaminocyclohexane, 1,4-bisaminomethylcyclohexane, 2,6-bisaminomethylnorbornene, 3-aminomethyl-3,5,5-trimethylcyclohexylamine and the like, and combinations thereof can be used.

An aromatic diamine having 8 to 22 carbon atoms, for example m-xylene diamine, p-xylene diamine, bis-4-aminophenylpropane and the like, and combinations thereof can be used.

A lactam having 6 to 12 carbon atoms, for example ε-caprolactam or laurolactam, ω-aminodicarboxylic acid, ε-aminocaproic acid, ω-aminododecanoic acid and the like, and combinations thereof can be used.

In exemplary embodiments of the present invention, the amorphous polyamide resin (B) include polyamide prepared from terephthalic acid, 2,2,4-trimethyl hexamethylene diamine and 2,4,4-trimethyl hexamethylene diamine; polyamide prepared from isophthalic acid and 1,6-hexamethylene diamine; polyamide prepared from terephthalic acid, isophthalic acid and 1,6-hexamethylenediamine; copolyamide prepared from isophthalic acid, 3,3'-dimethyl-4,4'-diaminodicyclohexylmethane and laurolactam; polyamide prepared from 1,12-dodecane dicarboxylic acid and 4,4'-diaminodicyclohexylinethane; copolyamide prepared from terephthalic acid, isophthalic acid, 3,3'-dimethyl-4,4'-diaminodicyclohexylmethane and laurolactam; or a combination thereof.

In exemplary embodiments of the present invention, the amorphous polyamide resin (B) has a glass transition temperature of 110 to 200 °C, for example 120 to 160 °C measured by DSC. Examples of the amorphous polyamide resin having the above features comprise without limitation CX7323 made by Evonik Company (Germany) and G350 made by ARKEMA Company.

The polyamide resin composition include the amorphous polyamide resin (B) in an amount of 10 to 70 % by weight, for example 10 to 50 % by weight, based on 100 % by weight of the crystalline polyamide resin (A), the amorphous polyamide resin (B), the inorganic filler (C) and the white pigment (D). In some embodiments, polyamide resin composition include the amorphous polyamide resin (B) in an amount of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, or 70 % by weight. Further, according to some embodiments of the present invention, the amount of amorphous polyamide resin (B) is in a range from any of the foregoing amounts to any other of the foregoing amounts.

### (C) Inorganic Filler

The strength of resin can be improved by adding inorganic filler (C) into the blend of the crystalline polyamide resin (A) and the amorphous polyamide resin (B). Inorganic fillers having various shapes, such as but not limited to fibers, powders, granules, plates, needles, cloths, mats and the like and combinations thereof, can be used. Examples of the inorganic filler include without limitation inorganic fibers such as glass fibers, metallic coated glass fibers, ceramic fibers, carbon fibers, metallic carbide fibers, metallic cured material fibers, asbestos fibers, boron fibers and the like and combinations thereof.

In exemplary embodiments, glass fiber is used. Using glass fiber help improve moldability of the composition. Also mechanical properties such as tensile strength, flexural strength, flexural modulus and the like and heat-resistant properties such as heat distortion temperature and the like of the molded article prepared from the resin composition are improved.

In exemplary embodiments of the present invention, the glass fiber has an average length of 0.1 to 20 mm, for example 0.3 to 6 mm, and an aspect ratio (L (average length of fiber) / D (average external diameter of fiber)) of 10 to 2,000, for example 30 to 600.

The polyamide resin composition include the inorganic filler (C) in an amount of 10 to 60 % by weight, for example 10 to 40 % by weight, and as another example 10 to 30 % by weight, based on 100 % by weight of the crystalline polyamide resin (A), the amorphous polyamide resin (B), the inorganic filler (C) and the white pigment (D). In some embodiments, polyamide resin composition include the inorganic filler (C) in an amount of 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, or 60 % by weight. Further, according to some embodiments of the present invention, the amount of inorganic filler (C) is in a range from any of the foregoing amounts to any other of the foregoing amounts.

### (D) White Pigment

Examples of the white pigment (D) comprise without limitation titanium oxide, zinc sulfide, white lead, zinc sulfate, aluminum oxide and the like. These can be used alone or in combination thereof. White pigment treated with silane coupling agent, titanium coupling agent and the like can also be used. For example, white pigment surface-treated with a silane-based compound such as vinyltriethoxysilane, 2-aminopropyltriethoxysilane, 2-glycidoxypropyltriethoxysilane and the like can be used. In exemplary embodiments, the white pigment include titanium oxide.

Optical properties such as reflectance, concealment property and the like are improved by using the titanium oxide. In exemplary embodiments, the titanium oxide has a standard shape. The average particle diameter of the titanium oxide is 0.05 to 2.0 µm, for example 0.05 to 0.7 µm.

The polyamide resin composition include the white pigment (D) in an amount of 10 to 50 % by weight, for example 10 to 40 % by weight, and as another example 10 to 35 % by weight, based on 100 % by weight of the crystalline polyamide resin (A), the amorphous polyamide resin (B), the inorganic filler (C) and the white pigment (D). In some embodiments, the polyamide resin compositionw include the white pigment (D) in an amount of 10,11, 12,13,14, 15,16, 17,18,19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, or 50 % by weight. Further, according to some embodiments of the present invention, the amount of the white pigment (D) is in a range from any of the foregoing amounts to any other of the foregoing amounts.

### (E) Light Stabilizer

The polyamide resin composition according to the present invention may further comprise a light stabilizer to prevent discoloration and inhibit degradation of light reflectance. Examples of the light stabilizer comprise without limitation compounds able to absorb UV such as benzophenone-based compounds, salicylate-based compounds, benzotriazole-based compounds, acrylonitrile-based compounds, other resonance-based compounds and the like; compounds able to capture radicals such as hindered amine-based compounds, hindered phenol-based compounds and the like; and combinations thereof.

In exemplary embodiments, a compound that has high solubility in a mixture of the crystalline polyamide resin (A) and amorphous polyamide resin (B), excellent heat resistance, and amide bonds in the molecule is used. Also, using both a compound able to absorb UV and a compound able to capture radicals improve light stability.

Depending on the effect of preventing discoloration and inhibiting degradation of light reflectance of the polyamide resin composition, the polyamide resin composition include the light stabilizer (E) in an amount of 0.05 to 2 parts by weight, for example 0.1 to 2 parts by weight, based on 100 parts by weight of the crystalline polyamide resin (A), the amorphous polyamide resin (B), the inorganic filler (C) and the white pigment (D). In some embodiments, the polyamide resin composition include the light stabilizer (E) in an amount of 0.05, 0.06, 0.07, 0.08, 0.09, 0.1, 0.2, 0.3, 0.4, 0.5, 0.6, 0.7, 0.8, 0.9, 1, or 2 parts by weight. Further, according to some embodiments of the present invention, the amount of the light stabilizer (E) is in a range from any of the foregoing amounts to any other of the foregoing amounts.

### (F) Inorganic Particle

The polyamide resin composition according to the present invention can further comprise inorganic particles to inhibit degradation of light reflectance. Examples of the inorganic particle comprise without limitation calcium carbonate, magnesium carbonate, zinc carbonate, zinc oxide, barium sulfate, alkaline carbonate, titanated mica, antimony oxide, magnesium oxide, calcium phosphate, silica, alumina, mica, talc, kaolin and the like. These can be used alone or in combination thereof.

The polyamide resin composition can include the inorganic particle (F) in an amount of 0.05 to 3 parts by weight, for example 0.05 to 2 parts by weight, based on 100 parts by weight of the crystalline polyamide resin (A), the amorphous polyamide resin (B), the inorganic filler (C) and the white pigment (D). In some embodiments, the polyamide resin composition can include the inorganic particle (F) in an amount of 0.05, 0.06, 0.07, 0.08, 0.09, 0.1, 0.2, 0.3, 0.4, 0.5, 0.6, 0.7, 0.8, 0.9, 1, 2, or 3 parts by weight. Further, according to some embodiments of the present invention, the amount of the inorganic particle (F) can be in a range from any of the foregoing amounts to any other of the foregoing amounts.

### (G) Additives

The polyamide resin composition according to the present invention can further comprise one or more additives. Examples of the additives include without limitation antioxidants, heat stabilizers, flame retardants, fluorescent whitening agents, plasticizers, thickeners, antistatic agents, release agents, pigments, nucleating agents and the like, and combinations thereof, depending on the use of the composition, so long as the additives have minimal negative impact on the properties of the composition. Examples of the antioxidants comprise without limitation phenol-based compounds, amine-based compounds, sulfur-based compounds, phosphorus-based compounds and the like, and combinations thereof. Examples of the heat stabilizer comprise without limitation lactone compounds, hydroquinone-based compounds, halogenated copper, iodine compounds and the like, and combinations thereof. Examples of the flame retardant comprise without limitation bromine-based compounds, chlorine-based compounds, phosphorus-based compounds, antimony-based compounds, inorganic compounds and the like, and combinations thereof.

Also, the polyamide resin composition according to the present invention can further comprise an olefin-based copolymer or modified olefin-based copolymer such as ethylene-methylacrylate copolymer, ethylene-ethylacrylate copolymer, ethylene-propylene copolymer, ethylene-1-butene copolymer, propylene-1-butene copolymer and the like; other polymers such as but not limited to polystyrene, fluorine resin, silicone resin, liquid crystal polymer and the like, and combinations thereof, depending on the use of the composition, so long as the additives have minimal negative impact on the properties of the composition.

The polyamide resin composition according to the present invention can be prepared by known methods, for example by mixing all components using a henschel mixer, V blender, ribbon blender, tumbler blender and the like, and after mixing further melting-mixing the mixture by means of a single-screw extruder, multi-screw extruder, kneader, banbury mixer and the like. The composition can be extruded in the form of pellets, which can be pulverized, or can be directly extruded into a molded article.

The polyamide resin composition according to the present invention has excellent light reflectance, heat resistance, and adhesion with a sealing resin such as epoxy resin. Further, when the polyamide resin composition is used as a reflector for a LED, degradation of reflectance is inhibited.

The present invention also provides a molded article prepared from the polyamide resin composition. For example, the polyamide resin composition according to the present invention can be prepared into a reflector for a LED by heat molding such as injection molding (insert molding of metal such as hoop molding), melt molding, extrusion molding, inflation molding, blow molding and the like. Also, the reflector for a LED prepared from the polyamide resin composition according to the present invention along with common LED elements and other parts can be sealed, connected or bonded by a sealing resin.

The polyamide resin composition and the molded article prepared from the same according to the present invention can be used in other products reflecting light, as well as in LEDs. For example, a reflector prepared from the polyamide resin composition according to the present invention can be used as a reflector for light-emitting devices of various electrical or electronic parts, interior lighting, ceiling lighting, outside lighting, automobile lighting, display units, head lights and the like. The polyamide resin composition according to the present invention can be molded into a reflector by known methods, for example heating and melting the polyamide resin composition, molding using a desired mold, and cooling. Also, the polyamide resin composition can be molded into a reflector by known methods, for example injection molding, compression molding, extrusion molding and the like. In exemplary embodiments of the present invention, the molded article has a reflectance at a 440 mn wavelength light of 70 to 100%, for example 80 to 90 %, and as another example 85 to 90 %, which is measured after the molded article is illuminated by a LED light source having a wavelength of 460 nm for 200 hours.

In exemplary embodiments of the present invention the molded article has a yellow index of 1 to 10, for example 1 to 5, and as another example 1 to 4.5, which is measured after the molded article is illuminated by a LED light source having a wavelength of 460 nm for 200 hours in constant temperature and humidity oven at a temperature of 85 °C and relative humidity of 85 %.

The invention may be better understood by reference to the following examples which are intended for the purpose of illustration and are not to be construed as in any way limiting the scope of the present invention, which is defined in the claims appended hereto.

### Examples

The specifications of each component used in the following examples and comparative examples are as follows.

### (A) Crystalline polyamide resin

C3200 made by Mitsui Chemical Company (Japan) and having a melting point of 320 °C measured by DSC, a crystallization temperature of 288 °C measured by DSC and a glass transition temperature of 85 °C measured by DSC is used.

### (B) Amorphous polyamide resin

CX7323 made by Evonik Company (Germany) and having a glass transition temperature of 142 °C measured by DSC and no crystallization temperature when measuring by DSC is used.

### (C) Inorganic filler

CS 910 made by OCV reinforcements Company (USA) is used.

### (D) White pigment

TiO₂ 2233 made by KRONOS Company (USA) is used.

### (E) Light Stabilizer

CHIMASSORB944 made by BASF Company (Germany) is used.

### Examples 1 - 4 and Comparative Examples 1 - 4

In a conventional mixer each component, antioxidant, heat stabilizer and releasing agent are added and mixed. The mixture is extruded by a twin screw extruder with L/D of 35 and diameter of 45 mm at a temperature of 250 to 350 °C to prepare pellets. The pellets are prepared into a specimen in the form of a plate (length: 90 mm, width: 49 mm, thickness: 2.5 mm) by a 10 oz injection molding machine at an injection temperature of 320 to 340 °C. The specimen is left at a temperature of 23 °C and relative humidity of 50% for 48 hours, and then the properties of the specimen are measured in accordance with the following methods. The results are set forth in Table 1.

### Methods for Measuring Properties

### [Melting point]

Using a DSC7 made by PerkinElemer Company, the temperature is maintained at 330 °C for 5 minutes, the temperature is decreased to 23 °C at a rate of 10 °C/min and the temperature is increased at the rate of 10 °C/min. Heat absorption peak when dissolved is determined as the melting point.

### [Crystallization temperature]

Using a DSC7 made by PerkinElemer Company, the temperature is maintained at 330 °C for 5 minutes. The peak of phase transition temperature, which occurs while the temperature is decreased to 23°C at a rate of 10 °C/min, is determined as the crystallization temperature.

### [Glass transition temperature]

Using a DSC7 made by PerkinElemer Company, the temperature is maintained at 330 °C for 5 minutes, the temperature is decreased to 23 °C at a rate of 10 °C/min and the temperature is increased at a rate of 10 °C/min. Second-order endothermic transition point is determined as the glass transition temperature.

### [Reflectance]

Using a specimen in the form of a plate, the reflectance at a 440 nm wavelength light is measured. The initial reflectance is measured, and the reflectance is measured after the specimen is illuminated by a LED light source having a wavelength of 460 nm for 200 hours under constant temperature and humidity conditions, and in particular in an oven at a temperature of 85°C and relative humidity of 85%. CM3500d made by KONICA MINOLTA HOLDINGS, INC. is used as the instrument for measuring reflectance.

### [Evaluation of delamination property]

Evaluation of delamination (release) property is conducted to determine whether or not the release property of the composition is poor when injection-molding the polyamide resin composition or to determine if a delamination (release) phenomenon due to the blend with a different kind of resin. An article with a length of 3 mm, width of 2.5 mm and height of 2 mm in the form of cup is prepared by hoop molding. Aqueous ink is dropped into the contact area of hoop material and the article in the form of cup. Whether or not the aqueous ink permeates into the contact surface of the hoop material and the article in the form of cup due to the capillary phenomenon is evaluated with the naked eye. The initial delamination property is evaluated, and the delamination property is evaluated after the hoop material and the article are left in a constant temperature (in particular in an oven) of 170 °C for 3 hours.
○: no permeation, Δ: small amount permeation, ×: large amount permeation

### [Yellow index]

The yellow index of a specimen with a thickness of 2.5 mm is measured in accordance with ASTM D1925 using a colorimeter Minolta Spectrophotometer 3600D using the CIE Lab color difference evaluation criteria. The initial yellow index is measured, and the yellow index is measure after the specimen is illuminated by a LED light source having a wavelength of 460 nm for 200 hours under constant temperature and humidity conditions, and in particular in an oven at a temperature of 85 °C and a relative humidity of 85%.

**[Table 1]**

| | | Examples | | | | Comparative Examples | | | |
|---|---|---|---|---|---|---|---|---|---|
| | | 1 | 2 | 3 | 4 | 1 | 2 | 3 | 4 |
| (A) Crystalline Polyamide (wt%) | | 50 | 40 | 10 | 30 | 60 | - | 40 | 50 |
| (B) Amorphous Polyamide (wt%) | | 10 | 20 | 50 | 30 | - | 60 | 20 | 10 |
| (C) Inorganic Filler (wt%) | | 15 | 10 | 15 | 15 | 10 | 15 | 5 | 15 |
| (D) White Pigment (wt%) | | 25 | 30 | 25 | 25 | 30 | 25 | 35 | 25 |
| (E) Light Stabilizer (parts by weight) | | 0.5 | 1 | 1 | 0.5 | 1.5 | 1 | 1 | 5 |
| Reflectance (%) | Initial | 93 | 92 | 92 | 93 | 89 | 92 | 87 | 91 |
| | After 200 hours | 90 | 90 | 89 | 89 | 75 | 62 | 64 | 87 |
| Evaluation of Delamination Property | Initial | ○ | ○ | ○ | ○ | Δ | ○ | Δ | ○ |
| | 170 °C, After 3 hours | ○ | ○ | ○ | ○ | × | × | × | ○ |
| Yellow Index | Initial | 3.1 | 3.5 | 3.6 | 3.5 | 4.6 | 5.0 | 2.0 | 8.2 |
| | After 200 hours | 4.5 | 4.3 | 4.0 | 4.2 | 8.4 | 12.5 | 4.5 | 22.5 |

As shown in Table 1, Examples 1 to 4 maintain a reflectance of 85% or more after the specimen is illuminated by a LED light source having a wavelength of 460 nm for 200 hours under constant temperature and humidity conditions of 85°C and relative humidity of 85%. However, when the crystalline polyamide resin or the amorphous polyamide resin is used alone (Comparative Example 1 or 2) and the inorganic filler is used in an amount outside of the present invention (Comparative Example 3), the reflectance is significantly decreased after the specimen is illuminated by a LED light source having a wavelength of 460 nm for 200 hours under constant temperature and humidity conditions of a temperature of 85°C and relative humidity of 85%.

Also, when the light stabilizer is present in an amount outside of the amount of the present invention (Comparative Example 4), the initial yellow index is increased and the yellow index is significantly increased after the specimen is illuminated by a LED light source having a wavelength of 460 nm for 200 hours under constant temperature and humidity conditions of a temperature of 85°C and relative humidity of 85%.

Also, when the amorphous polyamide resin is used alone (Comparative Example 2), the initial yellow index is good but the yellow index significantly increases after the specimen is illuminated by a LED light source having a wavelength of 460 nm for 200 hours under constant temperature and humidity conditions of a temperature of 85°C and a relative humidity of 85%. If the yellow index is increased, when the light derived from a LED light source is illuminated onto a LED reflector, the absorbable amount of incident light of the reflector is increased, and thereby the efficiency of the LED light source deteriorates.

Also, when the crystalline polyamide rein is used alone (Comparative Example 1), and the inorganic filler is included in an amount outside of the present invention (Comparative Example 3), permeation phenomenon of aqueous ink appears during the initial evaluation of the delamination property and the evaluation of the delamination property after the hoop material and the article are left at a constant temperature of 170°C for 3 hours. When the amorphous polyamide resin is used alone (Comparative Example 2), the initial evaluation of delamination property is good but permeation phenomenon of aqueous ink appears during the evaluation of delamination property after the hoop material and the article are left at a constant temperature of 170°C for 3 hours.

Many modifications and other embodiments of the invention will come to mind to one skilled in the art to which this invention pertains having the benefit of the teachings presented in the foregoing descriptions. Although specific terms are employed herein, they are used in a generic and descriptive sense only and not for purposes of limitation, the scope of the invention being defined in the claims.

## Claims

1. A polyamide resin composition comprising:
(A) 10 to 70 % by weight of crystalline polyamide resin with a melting point of 260 to 350 °C determined as heat absorption peak when dissolved measured by using DSC by maintaining temperature at 330 °C for 5 minutes, decreasing the temperature to 23 °C at a rate of 10 °C/min and increasing the temperature at the rate of 10 °C/min, a crystallization temperature of 260 to 320 °C determined as peak of phase transition temperature measured by using DSC by maintaining temperature at 330 °C for 5 minutes and decreasing the temperature to 23 °C at a rate of 10 °C/min, and a glass transition temperature of less than 100 °C determined as second-order endothermic transition point measured by using DSC by maintaining temperature at 330 °C for 5 minutes, decreasing the temperature to 23 °C at a rate of 10 °C/min and increasing the temperature at the rate of 10 °C/min;
(B) 10 to 70 % by weight of amorphous polyamide resin with a glass transition temperature of 110 to 200 °C determined as second-order endothermic transition point measured by using DSC by maintaining temperature at 330 °C for 5 minutes, decreasing the temperature to 23 °C at a rate of 10 °C/min and increasing the temperature at the rate of 10 °C/min;
(C) 10 to 60 % by weight of inorganic filler being an inorganic fibre;
(D) 10 to 50 % by weight of white pigment, based on 100 % by weight of the crystalline polyamide resin (A), the amorphous polyamide resin (B), the inorganic filler (C) and the white pigment (D), and
(E) 0.05 to 2 part by weight of light stabilizer, based on 100 parts by weight of the crystalline polyamide resin (A), the amorphous polyamide resin (B), the inorganic filler (C) and the white pigment (D),
wherein the inorganic fibre (C) comprises a glass fiber with an average length of 0.1 to 20 mm and an aspect ratio of 10 to 2,000 wherein the aspect ratio is defined as L (average length of the fibre) / D (average diameter of the fibre), and
wherein the white pigment (D) comprises titanium oxide, zinc sulfide, white lead, zinc sulfate, or a combination thereof.

2. The polyamide resin composition of claim 1, further comprising (F) 0.05 to 3 parts by weight of inorganic particles selected from the group comprising calcium carbonate, magnesium carbonate, zinc carbonate, zinc oxide, barium sulphate, alkaline carbonate, titanated mica, antimony oxide, magnesium oxide, calcium phosphate, silica, alumina, mica, talc, and kaolin, based on 100 parts by weight of the crystalline polyamide resin (A), the amorphous polyamide resin (B), the inorganic fibre (C) and the white pigment (D).

3. The polyamide resin composition of any one of claims 1 to 2, wherein the crystalline polyamide resin (A) comprises (a-1) units derived from dicarboxylic acid and (a-2) units derived from diamine; and the units derived from dicarboxylic acid (a-1) comprise 30 to 100 mol% of units derived from terephthalic acid, and 0 to 70 mol% of units derived from aromatic dicarboxylic acid other than terephthalic acid, 0 to 70 mol% of units derived from C4 to C20 aliphatic dicarboxylic acid or 0 to 70 mol% of a combination of units derived from aromatic dicarboxylic acid other than terephthalic acid and units derived from C4 to C20 aliphatic dicarboxylic acid, based on 100 mol% of the units derived from dicarboxylic acid; and the units derived from diamine (a-2) comprise units derived from C4 to C20 linear aliphatic diamine, C4 to C20 branched aliphatic diamine, or a combination thereof.

4. The polyamide resin composition of any one of claims 1 to 3, wherein the amorphous polyamide resin (B) has a glass transition temperature of 120 to 160°C determined as second-order endothermic transition point measured by using DSC by maintaining temperature at 330 °C for 5 minutes, decreasing the temperature to 23 °C at a rate of 10 °C/min and increasing the temperature at the rate of 10°C/min.

5. The polyamide resin composition of any one of claims 1 to 4, wherein the amorphous polyamide resin (B) comprises a polyamide prepared from terephthalic acid, 2,2,4-trimethyl hexamethylene diamine and 2,4,4-trimethyl hexamethylene diamine; polyamide prepared from isophthalic acid and 1,6-hexamethylene diamine; polyamide prepared from terephthalic acid, isophthalic acid and 1,6-hexamethylene diamine; copolyamide prepared from isophthalic acid, 3,3'-dimethyl-4,4'-diaminodicyclohexylmethane and laurolactam; polyamide prepared from 1,12-dodecane dicarboxylic acid and 4,4'-diaminodicyclohexylmethane; copolyamide prepared from terephthalic acid, isophthalic acid, 3,3'-dimethyl-4,4'-diaminodicyclohexylmethane and laurolactam; or a combination thereof.

6. The polyamide resin composition of any one of claims 1 to 5, wherein the light stabilizer (E) comprises a hindered amine-based compound.

7. The polyamide resin composition of any one of claims 1 to 6, further comprising an additive comprising an antioxidant, heat stabilizer, flame retardant, fluorescent whitening agent, plasticizer, thickener, antistatic agent, release agent, pigment, nucleating agent or a combination thereof.

8. A molded article obtainable from the polyamide resin composition of any one of claims 1 to 7.

9. The molded article of claim 8, having a reflectance of 80 to 90% at a 440 nm wavelength light, which is measured after the molded article is illuminated by a LED light source having a wavelength of 460 nm for 200 hours in a constant temperature and humidity oven of 85 °C and 85% relative humidity.

10. The molded article of claim 8 or claim 9, having a yellow index in accordance with ASTM D1925 of 1 to 5, which is measured after the molded article is illuminated by a LED light source having a wavelength of 460 nm for 200 hours in a constant temperature and humidity oven of 85 °C and 85% relative humidity.

## Patentansprüche

1. Polyamidharzzusammensetzung, umfassend:
(A) 10 bis 70 Gewichts-% kristallines Polyamidharz mit einem Schmelzpunkt von 260 bis 350°C bestimmt als Wärme-Absorptions-Peak, wenn gelöst, gemessen unter Verwendung von DSC durch Halten einer Temperatur bei 330°C für 5 Minuten, Absenken der Temperatur auf 23°C bei einer Rate von 10°C/min und Erhöhen der Temperatur bei der Rate von 10°C/min, einer Kristallisationstemperatur von 260 bis 320°C bestimmt als Peak einer Phasenübergangstemperatur, gemessen unter Verwendung von DSC durch Halten einer Temperatur bei 330°C für 5 Minuten und Absenken der Temperatur auf 23°C bei einer Rate von 10°C/min, und einer Glasübergangstemperatur von weniger als 100°C bestimmt als endothermer Übergangspunkt zweiter Ordnung gemessen unter Verwendung von DSC durch Halten einer Temperatur bei 330°C für 5 Minuten, Absenken der Temperatur auf 23°C bei einer Rate von 10°C/min und Erhöhen der Temperatur bei der Rate von 10°C/min;
(B) 10 bis 70 Gewichts-% amorphes Polyamidharz mit einer Glasübergangstemperatur von 110 bis 200°C bestimmt als endothermer Übergangspunkt zweiter Ordnung gemessen unter Verwendung von DSC durch Halten einer Temperatur bei 330°C für 5 Minuten, Absenken der Temperatur auf 23°C bei einer Rate von 10°C/min und Erhöhen der Temperatur bei der Rate von 10°C/min;
(C) 10 bis 60 Gewichts-% anorganischer Füllstoff, bei dem es sich um eine anorganische Faser handelt;
(D) 10 bis 50 Gewichts-% Weißpigment, bezogen auf 100 Gewichts-% des kristallinen Polyamidharzes (A), des amorphen Polyamidharzes (B), des anorganischen Füllstoffs (C) und des Weißpigments (D), und
(E) 0,05 bis 2 Gewichtsteile Lichtstabilisator, bezogen auf 100 Gewichtsteile des kristallinen Polyamidharzes (A), des amorphen Polyamidharzes (B), des anorganischen Füllstoffs (C) und des Weißpigments (D),
wobei die anorganische Faser (C) eine Glasfaser mit einer durchschnittlichen Länge von 0,1 bis 20 mm und einem Aspektverhältnis von 10 bis 2000 umfasst, wobei das Aspektverhältnis als L (durchschnittliche Länge der Faser)/D (durchschnittlicher Durchmesser der Faser) definiert ist, und
wobei das Weißpigment (D) Titanoxid, Zinksulfid, Bleiweiß, Zinksulfat, oder eine Kombination davon umfasst.

2. Polyamidharzzusammensetzung nach Anspruch 1, weiterhin umfassend (F) 0,05 bis 3 Gewichtsteile anorganische Teilchen ausgewählt aus der Gruppe umfassend Calciumcarbonat, Magnesiumcarbonat, Zinkcarbonat, Zinkoxid, Bariumsulfat, alkalisches Carbonat, titaniertes Mica bzw. titanierter Glimmer, Antimonoxid, Magnesiumoxid, Calciumphosphat, Siliciumdioxid bzw. Silica, Aluminiumoxid bzw. Alumina, Mica bzw. Glimmer, Talk und Kaolin, bezogen auf 100 Gewichtsteile des kristallinen Polyamidharzes (A), des amorphen Polyamidharzes (B), der anorganischen Faser (C) und des Weißpigments (D).

3. Polyamidharzzusammensetzung nach irgendeinem der Ansprüche 1 bis 2, wobei das kristalline Polyamidharz (A) (a-1) von Dicarbonsäure abgeleitete Einheiten und (a-2) von Diamin abgeleitete Einheiten umfasst; und die von Dicarbonsäure abgeleiteten Einheiten (a-1) 30 bis 100 Mol-% an Einheiten, die von Terephthalsäure abgeleitet sind, und 0 bis 70 Mol-% an Einheiten, die von einer anderen aromatischen Dicarbonsäure als Terephthalsäure abgeleitet sind, 0 bis 70 Mol-% an Einheiten, die von einer C4- bis C20-aliphatischen Dicarbonsäure abgeleitet sind, oder 0 bis 70 Mol-% einer Kombination von Einheiten, die von einer anderen aromatischen Dicarbonsäure als der Terephthalsäure abgeleitet sind und von Einheiten, die von einer C4- bis C20-aliphatischen Dicarbonsäure abgeleitet sind, umfassen, bezogen auf 100 Mol-% der Einheiten, die von Dicarbonsäure abgeleitet sind; und die vom Diamin abgeleiteten Einheiten (a-2) Einheiten umfassen, die von einem C4-bis C20-linearen aliphatischen Diamin, C4-bis C20-verzweigten aliphatischen Diamin, oder eine Kombination davon abgeleitet sind.

4. Polyamidharzzusammensetzung nach irgendeinem der Ansprüche 1 bis 3, wobei das amorphe Polyamidharz (B) eine Glasübergangstemperatur von 120 bis 160°C umfasst, bestimmt als endothermer Übergangspunkt zweiter Ordnung, gemessen unter Verwendung von DSC durch Halten einer Temperatur bei 330°C für 5 Minuten, Absenken der Temperatur auf 23°C bei einer Rate von 10°C/min und Erhöhen der Temperatur bei der Rate von 10°C/min.

5. Polyamidharzzusammensetzung nach irgendeinem der Ansprüche 1 bis 4, wobei das amorphe Polyamidharz (B) ein Polyamid, das aus Terephthalsäure, 2,2,4-Trimethylhexamethylendiamin und 2,4,4-Trimethylhexamethylendiamin hergestellt ist; ein Polyamid, das aus Isophthalsäure und 1,6-Hexamethylendiamin hergestellt ist; ein Polyamid, das aus Terephthalsäure, Isophthalsäure und 1,6-Hexamethylendiamin hergestellt ist; ein Copolyamid, das aus Isophthalsäure, 3,3'-Dimethyl-4,4'-diaminodicyclohexylmethan und Laurolactam hergestellt ist; ein Polyamid, das aus 1,12-Dodecandicarbonsäure und 4,4'-Diaminodicyclohexylmethan hergestellt ist; ein Copolyamid, das aus Terephthalsäure, Isophthalsäure, 3,3'-Dimethyl-4,4'-diaminodicyclohexylmethan und Laurolactam hergestellt ist; oder eine Kombination davon umfasst.

6. Polyamidharzzusammensetzung nach irgendeinem der Ansprüche 1 bis 5, wobei der Lichtstabilisator (E) eine gehinderte Verbindung auf Aminbasis umfasst.

7. Polyamidharzzusammensetzung nach irgendeinem der Ansprüche 1 bis 6, weiterhin umfassend ein Additiv umfassend ein Antioxidationsmittel, Wärmestabilisator, Flammschutzmittel, fluoreszierenden Weißtöner, Plastifikator bzw. Weichmacher, Verdickungsmittel, antistatisches Mittel, Trennmittel, Pigment, Nukleierungsmittel, oder eine Kombination davon.

8. Formgegenstand, erhältlich aus der Polyamidharzzusammensetzung nach irgendeinem der Ansprüche 1 bis 7.

9. Formgegenstand nach Anspruch 8, mit einem Reflexionsvermögen bzw. Reflexionsgrad von 80 bis 90% bei Licht einer Wellenlänge von 440 nm, welches bzw. welcher gemessen wird, nachdem der Formgegenstand mit einer LED-Lichtquelle mit einer Wellenlänge von 460 nm für 200 Stunden bei konstanter Temperatur und einem Feuchtigkeitsofen von 85°C und 85% relativer Feuchtigkeit bestrahlt worden ist.

10. Formgegenstand nach Anspruch 8 oder Anspruch 9, mit einem Gelb-Index gemäß ASTM D1925 von 1 bis 5, welcher gemessen wird, nachdem der Formgegenstand mit einer LED-Lichtquelle mit einer Wellenlänge von 460 nm für 200 Stunden bei konstanter Temperatur und einem Feuchtigkeitsofen von 85°C und 85% relativer Feuchtigkeit bestrahlt worden ist.

## Revendications

1. Composition de résine polyamide comprenant :
(A) de 10 à 70 % en poids de résine polyamide cristalline ayant un point de fusion de 260 à 350 °C, déterminé en tant que pic d'absorption de chaleur lorsqu'elle est dissoute, mesuré par ACD en maintenant la température à 330 °C pendant 5 minutes, en abaissant la température à 23 °C à une vitesse de 10 °C/min et en augmentant la température à la vitesse de 10 °C/min, une température de cristallisation comprise entre 260 et 320 °C déterminée en tant que pic de température de transition de phase mesuré par ACD en maintenant la température à 330 °C pendant 5 minutes et en abaissant la température à 23 °C à une vitesse de 10 °C/min, et une température de transition vitreuse inférieure à 100 °C déterminée en tant que point de transition endothermique de second ordre mesuré par ACD en maintenant la température à 330 °C pendant 5 minutes, en abaissant la température à 23 °C à une vitesse de 10 °C/min et en augmentant la température à la vitesse de 10 °C/min ;
(B) de 10 à 70 % en poids de résine de polyamide amorphe ayant une température de transition vitreuse comprise entre 110 et 200 °C déterminée en tant que point de transition endothermique de second ordre mesuré par ACD en maintenant la température à 330 °C pendant 5 minutes, en abaissant la température à 23 °C à une vitesse de 10 °C/min et en augmentant la température à la vitesse de 10 °C/min ;
(C) de 10 à 60 % en poids de charge de remplissage inorganique étant une fibre inorganique ;
(D) de 10 à 50 % en poids de pigment blanc, sur la base de 100 % en poids de la résine polyamide cristalline (A), de la résine polyamide amorphe (B), de la charge de remplissage inorganique (C) et du pigment blanc (D), et
(E) de 0,05 à 2 parties en poids de photostabilisant, sur la base de 100 parties en poids de la résine polyamide cristalline (A), de la résine polyamide amorphe (B), de la charge de remplissage inorganique (C) et du pigment blanc (D),
dans laquelle la fibre inorganique (C) comprend une fibre de verre ayant une longueur moyenne de 0,1 à 20 mm et un rapport de forme de 10 à 2 000, dans laquelle le rapport de forme est défini par L (longueur moyenne de la fibre)/D (diamètre moyen de la fibre), et
dans laquelle le pigment blanc (D) comprend de l'oxyde de titane, du sulfure de zinc, du blanc de plomb, du sulfate de zinc ou une combinaison de ceux-ci.

2. Composition de résine polyamide selon la revendication 1, comprenant en outre (F) de 0,05 à 3 parties en poids de particules inorganiques choisies dans le groupe comprenant le carbonate de calcium, le carbonate de magnésium, le carbonate de zinc, l'oxyde de zinc, le sulfate de baryum, le carbonate alcalin, le mica titanisé, l'oxyde d'antimoine, l'oxyde de magnésium, le phosphate de calcium, la silice, l'alumine, le mica, le talc et le kaolin, sur la base de 100 parties en poids de la résine polyamide cristalline (A), de la résine polyamide amorphe (B), de la fibre inorganique (C) et du pigment blanc (D).

3. Composition de résine polyamide selon l'une quelconque des revendications 1 à 2, dans laquelle la résine polyamide cristalline (A) comprend (a-1) des unités provenant de l'acide dicarboxylique et (a-2) des unités provenant de la diamine ; et les unités provenant de l'acide dicarboxylique (a-1) comprennent entre 30 et 100 % en mole d'unités provenant de l'acide téréphtalique, et entre 0 et 70 % en mole d'unités provenant d'un acide dicarboxylique aromatique autre que l'acide téréphtalique, entre 0 et 70 % en mole d'unités provenant de l'acide dicarboxylique aliphatique en C4 à C20 ou entre 0 et 70 % en mole d'une combinaison d'unités provenant d'un acide dicarboxylique aromatique autre que l'acide téréphtalique et d'unités provenant de l'acide dicarboxylique aliphatique en C4 à C20, sur la base de 100 % en mole des unités provenant de l'acide dicarboxylique ; et les unités provenant de la diamine (a-2) comprennent des unités provenant de la diamine aliphatique linéaire en C4 à C20, de la diamine aliphatique ramifiée en C4 à C20, ou une combinaison de celles-ci.

4. Composition de résine polyamide selon l'une quelconque des revendications 1 à 4, dans laquelle la résine polyamide amorphe (B) a une température de transition vitreuse comprise entre 120 et 160 °C déterminée en tant que point de transition endothermique de second ordre mesuré par ACD en maintenant la température à 330 °C pendant 5 minutes, en abaissant la température à 23 °C à une vitesse de 10 °C/min et en augmentant la température à la vitesse de 10 °C/min.

5. Composition de résine polyamide selon l'une quelconque des revendications 1 à 3, dans laquelle la résine polyamide amorphe (B) comprend un polyamide préparé à partir d'acide téréphtalique, de 2,2,4-triméthylhexaméthylènediamine et de 2,4,4-triméthylhexaméthylènediamine ; un polyamide préparé à partir d'acide isophtalique et de 1,6-hexaméthylènediamine ; un polyamide préparé à partir d'acide téréphtalique, d'acide isophtalique et de 1,6-hexaméthylènediamine ; un copolyamide préparé à partir d'acide isophtalique, de 3,3'-diméthy1,4,4'-diaminodicyclohexylméthane et de laurolactame ; un polyamide préparé à partir d'acide 1,12-dodécane-dicarboxylique et de 4,4'-diaminodicyclohexylméthane ; un copolyamide préparé à partir d'acide téréphtalique, d'acide isophtalique, de 3,3'-diméthyl,4,4'-diaminodicyclohexylméthane et de laurolactame ; ou une combinaison de ceux-ci.

6. Composition de résine polyamide selon l'une quelconque des revendications 1 à 5, dans laquelle le photostabilisant (E) comprend un composé à base d'amine encombrée.

7. Composition de résine polyamide selon l'une quelconque des revendications 1 à 6, comprenant en outre un additif comprenant un antioxydant, un stabilisant thermique, un ignifugeant, un azurant fluorescent, un plastifiant, un épaississant, un agent antiélectrostatique, un agent de démoulage, un pigment, un agent de nucléation ou une combinaison de ceux-ci.

8. Article moulé pouvant être obtenu à partir de la composition de résine polyamide selon l'une quelconque des revendications 1 à 7.

9. Article moulé selon la revendication 8, ayant un pouvoir réfléchissant compris entre 80 et 90 % à une longueur d'onde lumineuse de 440 nm, qui est mesuré après éclairement de l'article moulé à l'aide d'une source de lumière DEL ayant une longueur d'onde de 460 nm pendant 200 heures dans une étuve à température et à humidité constantes de 85 °C et 85 % d'humidité relative.

10. Article moulé selon la revendication 8 ou 9, ayant un indice de jaune conformément à l'ASTM D1925 compris entre 1 et 5, qui est mesuré après éclairement de l'article moulé à l'aide d'une source de lumière DEL ayant une longueur d'onde de 460 nm pendant 200 heures dans une étuve à température et à humidité constantes de 85 °C et 85 % d'humidité relative.
